# EUROPÄISCHE PATENTSCHRIFT

(11) **EP 2 583 873 B1**
(45) Veröffentlichungstag und Bekanntmachung des Hinweises auf die Patenterteilung: **30.11.2016**
(21) Anmeldenummer: 12188610.5
(22) Anmeldetag: 16.10.2012
(51) Int. Cl.: B60T 8/32, F16D 66/00, F16D 65/00, F16D 55/00, F16D 65/78

(54) **Fahrwerksbestandteil umfassend ein hitzeempfindliches elektrisches Bauteil**
Undercarriage component comprising a heat-sensitive electric component
Composant de châssis comprenant un composant électrique sensible à la chaleur

(30) Priorität: 19.10.2011 DE 102011116286
(43) Veröffentlichungstag der Anmeldung: 24.04.2013
(73) Patentinhaber: Schmitz Cargobull AG, 48341 Altenberge (DE)
(72) Erfinder: Norpoth, Peter, 49429 Visbek (DE)
(74) Vertreter: Cohausz & Florack

(56) Entgegenhaltungen:
- DE-A1-102007 056 340
- DE-A1-102009 038 493
- KR-A- 20100 093 767

## Beschreibung

Die Erfindung betrifft ein Fahrwerksbestandteil eines Nutzfahrzeugs, insbesondere Anhängers oder Sattelaufliegers, mit einer Achse, einer Bremsscheibe und einem nahe der Bremsscheibe angeordneten elektrischen Bauteil, wobei das elektrische Bauteil einen schaftförmigen Abschnitt und einen Anschlussabschnitt zum Anschluss eines elektrischen Kabels aufweist und wobei der schaftförmige Abschnitt in einen hülsenförmigen Abschnitt eines Hitzeschilds aufgenommen ist.

Derartige Fahrwerksbestandteile sind insbesondere bei mit einem Antiblockiersystem (ABS-System) ausgerüsteten Nutzfahrzeugen bekannt, bei dem ABS-Sensoren die Rotationsgeschwindigkeit bestimmter Räder des Nutzfahrzeugs ermitteln, siehe z.B. DE 10 2007 056 340 oder DE 10 2009 038 493. Kommen diese während des Verzögerns des Nutzfahrzeugs zum Stillstand, veranlasst das ABS-System kurzfristig eine Reduzierung der Bremskraft, so dass sich das Rad wieder dreht. Letztlich verhindert das ABS-System das dauerhafte Blockieren der Räder eines Nutzfahrzeugs, während dieses abgebremst wird.

Um feststellen zu können, ob und wie schnell sich ein Rad dreht, müssen die ABS-Sensoren nahe an den sich drehenden Teilen des Rads bzw. der Achse positioniert werden. Dies bedeutet aber auch, dass die ABS-Sensoren bei mit Scheibenbremsen ausgerüsteten Nutzfahrzeugen nahe an den Scheibenbremsen positioniert werden. Dies gilt insbesondere dann, wenn eine möglichst kompakte Bauform des eingangs genannten Fahrwerksbestandteils gewünscht ist. Da die ABS-Sensoren über elektrische Kabel an die Steuereinheit des ABS-Systems angeschlossen sind und die Bremsscheiben sehr heiß werden können, besteht in der Praxis die Gefahr, dass die elektrischen Kabel bzw. die Anschlussabschnitte der ABS-Sensoren beschädigt werden. Die hier vorzugsweise verwendeten Kunststoffteile, können leicht schmelzen oder verbrennen, was Kurzschlüsse und/oder die Oxidation dann freiliegender Bauelemente zur Folge haben kann. Ein fehlerfreier Betrieb der ABS-Sensoren kann dann nicht mehr gewährleistet werden.

Der vorliegenden Erfindung liegt daher die Aufgabe zugrunde, das eingangs genannte und zuvor näher beschriebene Fahrwerksbestandteil derart auszugestalten und weiterzuentwickeln, dass ABS-Sensoren oder andere elektrische Bauteile zuverlässiger betrieben und/oder das Fahrwerksbestandteil ohne erhöhte Beschädigungsgefahr hinsichtlich des elektrischen Bauteils kompakter ausgebildet werden kann.

Diese Aufgabe ist bei einem Fahrwerksbestandteil gemäß dem Oberbegriff des Anspruchs 1 dadurch gelöst, dass das Hitzeschild einen dem Anschlussabschnitt des elektrischen Bauteils zugeordneten kragenförmigen Abschnitt aufweist und dass der Anschlussabschnitt in Richtung der Bremsscheibe vom kragenförmigen Abschnitt beabstandet ist.

Das elektrische Bauteil weist wenigstens einen schaftförmigen oder auch stabförmigen Abschnitt und einen Anschlussabschnitt zum Anschluss eines elektrischen Kabels auf. Dabei kann der schaftförmige Abschnitt zylindrisch ausgebildet sein. Dies ist aber weder notwendig noch von besonderer Bedeutung. Der schaftförmige Abschnitt ist vorzugsweise vielmehr dadurch bestimmt, dass er eine längliche Ausbildung hat. Der schaftförmige Abschnitt braucht jedoch in Längsrichtung nicht zwingend gerade zu sein, sondern kann bedarfsweise auch gekrümmt sein, gebogen verlaufen oder in anderer Art und Weise von einer geraden Form abweichen. Der Begriff "schaftförmig" ist vorliegend also vorzugsweise weit auszulegen.

Der schaftförmige Abschnitt bildet vorzugsweise den vorderen Teil des elektrischen Bauteils, der in Richtung des Rads weist. Der Anschlussabschnitt zum Anschluss eines elektrischen Kabels ist dagegen vorzugsweise am rückwärtigen, von dem Rad bzw. der Scheibenbremse wegweisenden Teil des elektrischen Bauteils vorgesehen.

Dem schaftförmigen bzw. stabförmigen Abschnitt ist ein Hitzeschild zugeordnet, das den schaftförmigen Abschnitt gegenüber einer zu starken Erwärmung schützt und gleichzeitig den schaftförmigen Abschnitt in Position hält. Hierzu weist das Hitzeschild einen hülsenförmigen Abschnitt auf, in dem der schaftförmige Abschnitt des elektrischen Bauteils aufgenommen ist.

Neben dem hülsenförmigen Abschnitt weist das Hitzeschild noch wenigstens einen kragenförmigen Abschnitt auf, wobei dieser dem Anschlussabschnitt des elektrischen Bauteils zugeordnet ist und den Anschlussabschnitt so gegenüber einer zu starken Erwärmung durch die beim Bremsen heiß werdende Bremsscheibe schützt. Der kragenförmige Abschnitt ist dabei aus der Richtung der Bremsscheibe betrachtet von dem Anschlussabschnitt beabstandet. Selbst wenn sich der kragenförmige Abschnitt des Hitzeschilds aufgrund seiner Nähe zur Bremsscheibe stark erwärmen sollte, kann die Wärme nur in geringem Maße zur Erwärmung des Anschlussabschnitts an diesen weitergeleitet werden, da infolge des Abstands zwischen dem kragenförmigen Abschnitt und dem Anschlussabschnitt nur eine geringe Wärmeübertragung, insbesondere geringe Wärmeleitung, möglich ist. In diesem Zusammenhang ist eine überwiegende Beabstandung von kragenförmigem Abschnitt und Anschlussabschnitt im Regelfall ausreichend. Ein geringfügiger Kontakt zwischen dem kragenförmigen Abschnitt und dem Anschlussabschnitt kann unschädlich sein, wenn über diesen Kontakt infolge eines geringen Querschnitts nur ein geringer Wärmestrom transportiert werden kann.

Die Erfindung hat also erkannt, dass durch die zuvor beschriebene Ausgestaltung des Hitzeschilds und dessen Anpassung an das elektrische Bauteil das elektrische Bauteil in erhöhtem Maße gegen überhöhte Temperaturen geschützt werden kann. Wenn dies gewünscht ist, kann das elektrische Bauteil aber aufgrund dieser Umstände auch näher an die Bremsscheibe herangerückt werden, um einen kompakteren Aufbau des Fahrwerks des Nutzfahrzeugs zu ermöglichen, ohne dass die Gefahr des Versagens des elektrischen Bauteils übermäßig zunimmt.

Bei einer ersten Ausgestaltung des Fahrwerksbestandteils, handelt es sich bei dem elektrischen Bauteil um einen ABS-Sensor. Dies ist deshalb bevorzugt, weil ABS-Sensoren meist nahe dem Rad und nahe der Bremsscheibe positioniert werden sollen und/oder müssen. Hier bietet sich das beschriebene Hitzeschild wegen seiner guten wärmeabschirmenden Eigenschaften besonders an.

Um die Wärmeaufnahme des Anschlussabschnitts des elektrischen Bauteils zu verringern, kann zwischen dem Anschlussabschnitt des elektrischen Bauteils und dem kragenförmigen Abschnitt in Richtung der Bremsscheibe ein thermisch isolierendes Material vorgesehen sein, das den kragenförmigen Abschnitt im Wesentlichen vom Anschlussabschnitt beabstanden kann. Als thermisch isolierende Materialien kommen in diesem Zusammenhang beispielsweise Keramiken oder Kunststoffe in Frage, wobei poröse Materialen mit darin eingeschlossenem Gas, wie z.B. Luft, bevorzugt sein können. Konstruktiv besonders einfach ist es jedoch, wenn zwischen dem kragenförmigen Abschnitt und dem Anschlussabschnitt ein Luftspalt verbleibt. Einerseits ist Luft ein schlechter Wärmeleiter. Andererseits kann so über den Fahrtwind ein großer Wärmestrom abgeführt werden. Dazu ist es besonders bevorzugt, wenn der Luftspalt wenigstens abschnittsweise breiter als 5 mm, vorzugsweise breiter als 1 cm ist.

Hinsichtlich der Wärmeabschirmung kann es bevorzugt sein, wenn jedenfalls im Wesentlichen alle Verbindungsgeraden zwischen dem Anschlussabschnitt und der Bremsscheibe den kragenförmigen Abschnitt des Hitzeschilds durchdringen. So wird vermieden, dass Wärmestrahlung von der Bremsscheibe den Anschlussabschnitt direkt in hohem Maße erwärmen kann.

Um gleichzeitig oder zusätzlich den kragenförmigen Abschnitt möglichst klein und damit materialsparend und kostengünstig herstellen zu können, kann der kragenförmige Abschnitt des Hitzeschilds den Anschlussabschnitt wenigstens abschnittsweise umgreifen, vorzugsweise derart geformt sein, dass das Hitzeschild eine Aufnahme zur Aufnahme des Anschlussabschnitts im Hitzeschild ausbildet.

In diesem Zusammenhang aber auch grundsätzlich bevorzugt ist es, wenn der kragenförmige Abschnitt des Hitzeschilds wenigstens teilweise eine sphärische Form, vorzugsweise muschelartige Form, aufweist. So kann eine vor Wärmestrahlung geschützte Aufnahme für den Anschlussabschnitt geschaffen und/oder dafür gesorgt werden, dass die von dem kragenförmigen Abschnitt reflektierte Hitze gestreut wird und folglich besser abgeleitet werden kann.

Damit konstruktiv einfach dafür Sorge getragen werden kann, dass der Anschlussabschnitt und der kragenförmige Abschnitt des Hitzeschilds voneinander beabstandet sind, bietet es sich an, wenn sich der kragenförmige Abschnitt ausgehend vom hülsenförmigen Abschnitt des Hitzeschilds schräg zur Längsrichtung des schaftförmigen bzw. stabförmigen Abschnitts des elektrischen Bauteils nach außen erstreckt. Somit nimmt der Abstand zwischen dem Anschlussabschnitt und dem kragenförmigen Abschnitt in Richtung auf das hintere, der Bremsscheibe abgewandte Ende zu.

Dies kann beispielsweise dadurch erreicht werden, dass der schaftförmige Abschnitt des elektrischen Bauteils bezogen auf die Längsrichtung der Achse schräg nach außen weist, und zwar vorzugsweise in einem Winkel von wenigstens 15° bezogen auf die Längsrichtung der Achse. Noch bessere Ergebnisse werden grundsätzlich erhalten, wenn der Winkel wenigstens 25° beträgt, vorausgesetzt der Einbauraum lässt dies zu. Im Falle eines großzügig bemessenen Einbauraums kann es zu besonders bevorzugenden Ergebnissen führen, wenn der Winkel wenigstens 35° beträgt.

Um das Hitzeschild und/oder das elektrische Bauteil in einem vorbestimmten Abstand zur Bremsscheibe positionieren zu können, kann das Hitzeschild eine in eine Nut der Achse eindringende Feder aufweisen. Zur Positionierung des Hitzeschilds in Längsrichtung der Achse muss dann lediglich die Feder des Hitzeschilds in die Nut, vorzugsweise Ringnut, der Achse eingesteckt werden. Es kann natürlich auch das Hitzeschild anstelle einer Feder eine Nut aufweisen, wenn die Achse anstelle der Nut eine Feder aufweist, die in gleicher Weise miteinander korrespondieren. Die Nut und die Feder verlaufen in beiden Fällen vorzugsweise senkrecht zur Längsrichtung der Achse bzw. parallel zur Bremsscheibe.

Eine hohe Widerstandsfähigkeit des Hitzeschilds gegenüber der Hitze der Bremsscheibe kann erreicht werden, wenn das Hitzeschild im Wesentlichen aus Stahl gefertigt ist. Stahl ermöglicht ferner eine gute Wärmeleitung und daher Ableitung der Wärme. Konstruktiv einfach und kostengünstig zu fertigen ist das Hitzeschild, wenn es aus Stahlguss gebildet ist.

Das Hitzeschild kann in einfacher Weise durch ein die Achse wenigstens im Wesentlichen umgreifendes Band an der Achse gehalten sein. Dies erlaubt eine einfache Montage und eine Gewichtseinsparung. Das Band kann ein Stahl- oder Blechband sein.

Insbesondere wenn es sich bei dem elektrischen Bauteil um einen ABS-Sensor handelt, kann der schaftförmige Abschnitt des elektrischen Bauteils einem Indexierring zugeordnet sein, der im inneren Ringraum der Bremsscheibe angeordnet sein kann. Die Bremsscheibe und der Indexierring können konzentrisch zueinander ausgebildet sein, um die Drehgeschwindigkeit präzise erfassen zu können. Bei dem Indexierring handelt es sich der Einfachheit halber vorzugsweise um einen Lochring.

Die Erfindung wird nachfolgend anhand einer lediglich ein Ausführungsbeispiel darstellenden Zeichnung näher erläutert. In der Zeichnung zeigt
- Fig. 1: ein Nutzfahrzeug mit einem erfindungsgemäßen Fahrwerksbestandteil in einer perspektivischen Ansicht,
- Fig. 2: das erfindungsgemäße Fahrwerksbestandteil aus Fig. 1 in einer perspektivischen Ansicht,
- Fig. 3: das Fahrwerksbestandteil aus Fig. 1 in einem Längsschnitt und
- Fig. 4: das Hitzeschild und das elektrische Bauteil des Fahrwerksbestandteils aus Fig. 1 in einer Explosionsdarstellung.

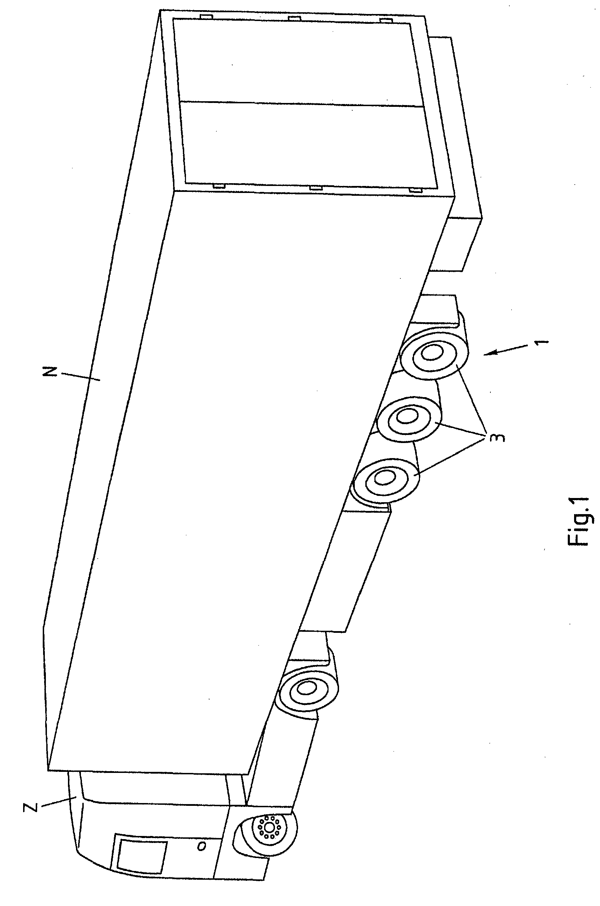

In der Fig. 1 ist ein Nutzfahrzeug N in Form eines Sattelaufliegers dargestellt. Es könnte sich aber auch um einen Anhänger oder dergleichen handeln. Das Nutzfahrzeug N wird von einer Zugmaschine Z gezogen und weist Fahrwerksbestandteile 1 auf, die auf Achsen 2 montierte Räder 3 umfassen. Den Rädern 3 sind Bremsscheiben 4 und diesen Bremssättel zugeordnet. Die Räder 3 werden abgebremst, indem von den Bremssätteln Bremsbacken gegen die Bremsscheiben 4 gepresst werden. Durch die entsprechende Reibung können die Bremsscheiben 4 beim Verzögern des Nutzfahrzeugs N sehr hohe Temperaturen annehmen. Teilweise fangen die Bremsscheiben 4 an zu glühen. Dementsprechend können die Bremsscheiben 4 einen sehr hohen Wärmestrom in Form von Wärmestrahlung abstrahlen.

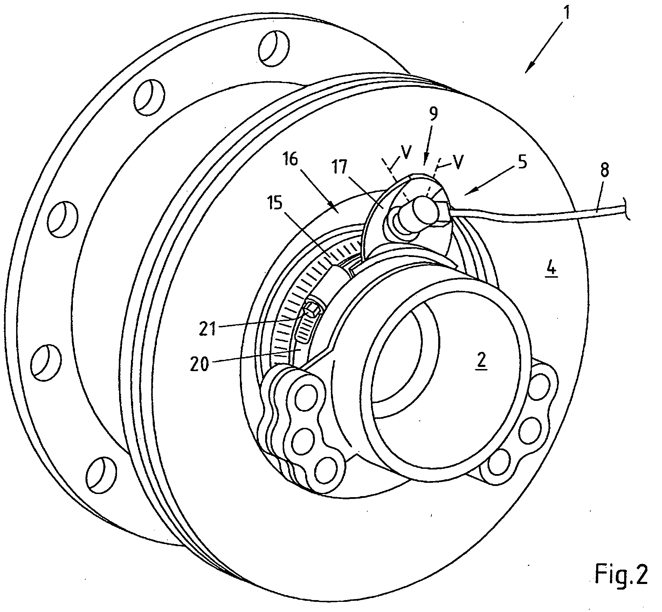

In der Fig. 2 ist eine solche Bremsscheibe 4 dargestellt. Ferner weist das dort dargestellte und insoweit bevorzugte Fahrwerksbestandteil 1 ein elektrisches Bauteil 5 in Form eines ABS-Sensors auf, das sehr nahe an der Bremsscheibe 4 positioniert ist.

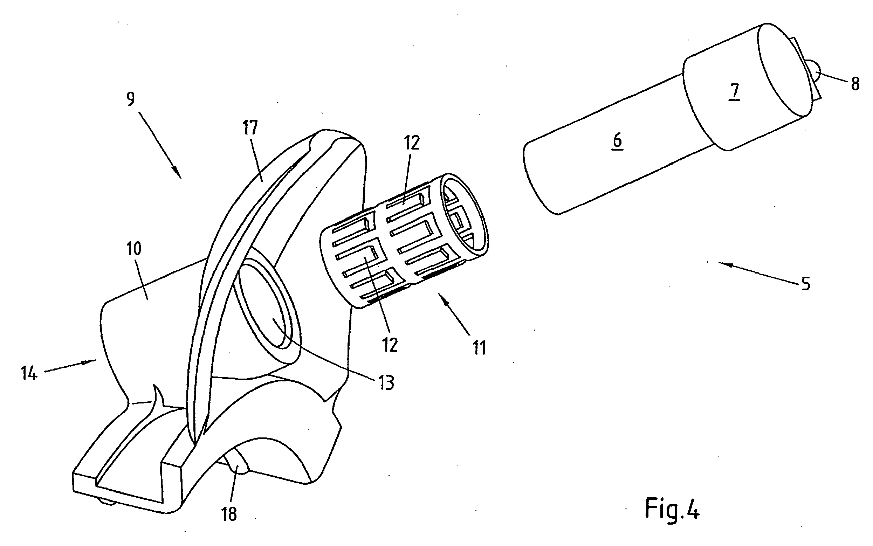

Das elektrische Bauteil 5 ist in der Fig. 4 im Detail dargestellt. Das dargestellte und insoweit bevorzugte elektrische Bauteil 5 weist einen schaftförmigen Abschnitt 6 auf, der ein stabförmiges Aussehen aufweist. Diesem schaftförmigen Abschnitt 6 schließt sich ein Anschlussabschnitt 7 zum Anschluss des elektrischen Bauteils 5 an ein elektrisches Kabel 8 an. Dieser Anschlussabschnitt 7 ist beim dargestellten und insoweit bevorzugten elektrischen Bauteil 5 aus Kunststoff gefertigt. Zudem weist das Kabel 8 eine Kunststoffummantelung auf. Der Anschlussabschnitt 7 des elektrischen Bauteils 5 kann daher durch Einwirken erhöhter Temperaturen beschädigt werden.

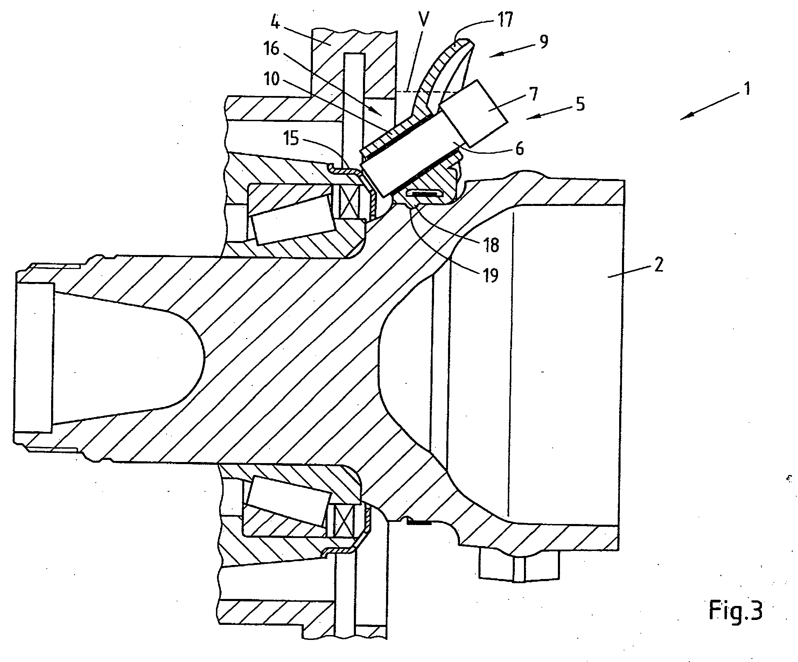

Um das elektrische Bauteil 5 vor einer übermäßigen Erwärmung durch die Bremsscheibe 4 zu schützen und so eine Beschädigung zu vermeiden, ist ein Hitzeschild 9 vorgesehen. Das Hitzeschild 9 ist in den Fig. 3 und 4 detailliert dargestellt.

Bei dem dort dargestellten und insoweit bevorzugten Hitzeschild 9 ist der schaftförmige Abschnitt 6 des elektrischen Bauteils 5 in einem hülsenförmigen Abschnitt 10 aufgenommen. Beim dargestellten und insoweit bevorzugten Fahrwerksbestandteil 1 ist der schaftförmige Abschnitt 6 des elektrischen Bauteils 5 in eine Montagehülse 11 eingeschoben, die im hülsenförmigen Abschnitt 10 des Hitzeschilds 9 positioniert werden kann. Zu diesem Zweck weist die beim dargestellten und insoweit bevorzugten Ausführungsbeispiel eine zylindrische Form aufweisende Montagehülse 11 Zungen 12 auf, die federnd ausgebildet sein können. Zudem bietet es sich an, wenn die Montagehülse 11 aus einem Blech gefertigt ist, aus dem die Zungen 12 herausgearbeitet sein können. Die Zungen 12 können in Anlage an die Innenflächen 13 des hülsenförmigen Abschnitts 10, insbesondere in Anlage mit entsprechenden Aufnahmen, des Hitzeschilds 9 geraten und so die Montagehülse 11 im hülsenförmigen Abschnitt 10 festlegen, bedarfsweise positionieren. Alternativ oder zusätzlich kann auch über ggf. weitere Zungen 12 die Monatagehülse 11 am schaftförmigen Abschnitt 6 des elektrischen Bauteils 5 festgelegt, bedarfsweise positioniert, werden. Die Montage des schaftförmigen Abschnitts 6 über die Montagehülse 11 führt ferner dazu, dass zwischen dem schaftförmigen Abschnitt 6 und dem hülsenförmigen Abschnitt 10 abschnittsweise wenigstens ein Luftspalt vorgesehen ist, so dass der Wärmetransport vom hülsenförmigen Abschnitt 10 auf den schaftförmigen Abschnitt 6 begrenzt werden kann.

Das vordere Ende des schaftförmigen Abschnitts 6 des elektrischen Bauteils 5 ist in einer Öffnung 14 des hülsenförmigen Abschnitts 10 vorgesehen oder ragt gar aus der

Öffnung 14 des hülsenförmigen Abschnitts 10 nach außen hervor. Dabei ist das vordere Ende des schaftförmigen Abschnitts 6 des elektrischen Bauteils 5 einem Indexierring 15 zugeordent, der konzentrisch zur Bremsscheibe 4 und in dem von der Bremsscheibe 4 definierten inneren Ringraum 16 vorgesehen ist. Der Indexierring 15 ist als Lochscheibe ausgebildet, die in regelmäßigen Abständen Löcher aufweist. Das Sensorsignal des ABS-Sensors 5 ist davon abhängig, ob vor dem vorderen Ende des schaftförmigen Abschnitts 6 ein Loch vorgesehen ist oder nicht. Der entsprechende ABS-Sensor kann also anhand der Konstanz oder mangelnden Konstanz des Messsignals ermitteln, ob sich das Rad 3 gerade dreht oder nicht.

Dem hülsenförmigen Abschnitt 10 schließt sich ein kragenförmiger Abschnitt 17 an, der einen Kragen um einen Teil des Anschlussabschnitts 7 des elektrischen Bauteils 5 bildet. In Richtung der Bremsscheibe 4 ist der Anschlussabschnitt 7 des elektrischen Bauteils 5 von dem kragenförmigen Abschnitt 17 beabstandet. Dieser Abstand wird durch einen Luftspalt gebildet, der bedarfsweise auch wenigstens teilweise mit einem isolierenden Material ausgefüllt sein könnte.

Beim dargestellten und insoweit bevorzugten Hitzeschild 9 weist der Luftspalt zwischen dem Anschlussabschnitt 7 und dem kragenförmigen Abschnitt 17 eine Breite von bis zu 1 cm und mehr auf, so dass durch den Luftspalt während der Fahrt reichlich Luft strömt und die Wärme vom kragenförmigen Abschnitt 17 abgeführt wird.

Beim dargestellten Fahrwerksbestandteill ist der kragenförmige Abschnitt 17 des Hitzeschilds 9 um den der Bremsscheibe 4 zugewandten Teil des Anschlussabschnitts 7 herumgezogen, so dass der Anschlussabschnitt 7 besser gegenüber Wärmestrahlung ausgehend von der Bremsscheibe 4 geschützt ist. Der kragenförmige Abschnitt 17 umgreift regelrecht diesen Teil des Anschlussabschnitts 7, wobei eine Art Aufnahme des Hitzeschilds 9 entsteht in der der Anschlussabschnitt 7 wenigstens teilweise aufgenommen wird. Der kragenförmige Abschnitt 17 des dargestellten und insoweit bevorzugten Hitzeschilds 9 weist eine überwiegend sphärische Form auf, die auch als muschelartige Form bezeichnet werden kann. Diesbezüglich kommt es insbesondere auf die Formgebung des dem Anschlussabschnitt 7 zugewandten Teils des kragenförmigen Abschnitts 17 an. Bedarfsweise kann aber auch der der Bremsscheibe 4 zugewandte Teil des kragenförmigen Abschnitts 17 sphärisch oder muschelartig ausgebildet sein, wie dies bei dem dargestellten und insoweit bevorzugten Fahrwerksbestandteil 1 der Fall ist.

Bei diesem Fahrwerksbestandteil 1 ist der kragenförmige Abschnitt 17 ferner derart geformt, dass im Wesentlichen alle Verbindungsgeraden V zwischen dem Anschlussabschnitt 7 und der Bremsscheibe 4 durch den kragenförmigen Abschnitt 17 des Hitzeschilds 9 hindurchgehen. Eine direkte Bestrahlung des Anschlussabschnitts 7 von der Bremsscheibe 4 mit Wärmestahlen ist damit wenigstens im Wesentlichen verhindert.

Im Übrigen ragt der kragenförmige Abschnitt 17 beim dargestellten und insoweit bevorzugten Hitzeschild 9 gegenüber dem hülsenförmigen Abschnitt 10 und/oder dem schaftförmigen Abschnitt 6 wenigstens teilweise radial nach außen, um so einen räumlichen Abstand zwischen dem Anschlussabschnitt 7 und dem kragenförmigen Abschnitt 17 bereitzustellen. Dies ist insbesondere in der Fig. 3 dargestellt. Beim dargestellten und insoweit bevorzugten Fahrwerksbestandteil 1 beträgt der Winkel mit dem der kragenförmige Abschnitt 17 gegenüber der Längsrichtung des schaftförmigen Abschnitts 6 nach außen ragt wenigstens 25°. Der Winkel kann aber auch größer sein, je nach der Neigung des schaftförmigen Abschnitts 6 des elektrischen Bauteils 5 und dem zur Verfügung stehenden Raum.

Der schaftförmige Abschnitt 6 ist aus Platzgründen geneigt. So kann der innere Radius der Bremsscheibe 4 verringert und somit die wirksame Oberfläche der Bremsscheibe 4 vergrößert werden. Beim dargestellten und insoweit bevorzugten Fahrwerksbestandteil 1 ist der schaftförmige Abschnitt 6 des elektrischen Bauteils 5 um wenigstens 15°, insbesondere wenigstens 30°, geneigt. Im Übrigen ist das elektrische Bauteil 5 so nahe an die Bremsscheibe 4 gerückt, dass das vordere, freie Ende 13 des schaftförmigen Abschnitts 6 bis in den inneren Ringraum 16 der Bremsscheibe 4 hineintaucht.

In den Fig. 3 und 4 ist eine Feder 18 des Hitzeschilds 9 dargestellt, welche in eine korrespondierende Nut 19 der Achse 2 eingreift. Sowohl die Feder 18 als auch die Nut 19, bei der es sich beim dargestellten und insoweit bevorzugten Fahrwerksbestandteil 1 um eine Ringnut handelt, erstrecken sich in einer Richtung parallel zur Bremsscheibe 4 und senkrecht zur Längserstreckung der Achse 2. Durch das Eingreifen der Feder 18 in die Nut 19 ergibt sich eine axiale Positionierung des Hitzeschilds 9 gegenüber der Bremsscheibe 4 in einem vorbestimmten Abstand.

Gehalten wird das Hitzeschild 9 aber im Wesentlichen durch ein Band 20, das um die Achse 2 herumgreift. Beim dargestellten Fahrwerksbestandteil 1 kann das Band 20 durch Anziehen einer Schraube 21 gespannt werden, um einen sicheren Sitz an der Achse 2 zu gewährleisten. Das Band 20 ist vorzugsweise aus Stahl, um einen dauerhaften, sicheren Halt des Hitzeschilds 9 in der gewünschten Position sicherstellen zu können. Das dargestellte und insoweit bevorzugte Hitzeschild 9 besteht ebenfalls im Wesentlichen aus Stahl, genauer gesagt aus Gussstahl.

## Patentansprüche

1. Fahrwerksbestandteil (1) eines Nutzfahrzeugs (N), insbesondere Anhängers oder Sattelaufliegers, mit einer Achse (2), einer Bremsscheibe (4) und einem nahe der Bremsscheibe (4) angeordneten elektrischen Bauteil (5), wobei das elektrische Bauteil (5) einen schaftförmigen Abschnitt (6) und einen Anschlussabschnitt (7) zum Anschluss eines elektrischen Kabels (8) aufweist und wobei der schaftförmige Abschnitt (6) in einem hülsenförmigen Abschnitt (10) eines Hitzeschilds (9) aufgenommen ist,
**dadurch gekennzeichnet, dass** das Hitzeschild (9) einen dem Anschlussabschnitt (7) des elektrischen Bauteils (5) zugeordneten kragenförmigen Abschnitt (17) aufweist und dass der Anschlussabschnitt (7) in Richtung der Bremsscheibe (4) vom kragenförmigen Abschnitt (17) beabstandet ist.

2. Fahrwerksbestandteil nach Anspruch 1,
**dadurch gekennzeichnet, dass** das elektrische Bauteil (5) ein ABS-Sensor ist.

3. Fahrwerksbestandteil nach Anspruch 1 oder 2,
**dadurch gekennzeichnet, dass** der Anschlussabschnitt (7) in Richtung der Bremsscheibe (4) vom kragenförmigen Abschnitt (17) durch ein thermisch isolierendes Material, vorzugsweise durch einen Luftspalt, beabstandet ist.

4. Fahrwerksbestandteil nach einem der Ansprüche 1 bis 3,
**dadurch gekennzeichnet, dass** im Wesentlichen alle Verbindungsgeraden zwischen dem Anschlussabschnitt (7) und der Bremsscheibe (4) den kragenförmigen Abschnitt (17) des Hitzeschilds (9) durchdringen.

5. Fahrwerksbestandteil nach einem der Ansprüche 1 bis 4,
**dadurch gekennzeichnet, dass** der kragenförmige Abschnitt (17) des Hitzeschilds (9) den Anschlussabschnitt (7) wenigstens abschnittsweise umgreift, vorzugsweise derart geformt ist, so dass das Hitzeschild (9) eine Aufnahme zur Aufnahme des Anschlussabschnitts (7) im Hitzeschild (9) ausbildet.

6. Fahrwerksbestandteil nach einem der Ansprüche 1 bis 5,
**dadurch gekennzeichnet, dass** der kragenförmige Abschnitt (17) des Hitzeschilds (9) wenigstens teilweise eine sphärische Form, vorzugsweise muschelartige Form, aufweist.

7. Fahrwerksbestandteil nach einem der Ansprüche 1 bis 6,
**dadurch gekennzeichnet, dass** sich der kragenförmige Abschnitt (17) des Hitzeschilds (9) ausgehend vom hülsenförmigen Abschnitt (10) des Hitzeschilds (9) schräg zur Längsrichtung des schaftförmigen Abschnitts (10) des elektrischen Bauteils (5) nach außen erstreckt.

8. Fahrwerksbestandteil nach einem der Ansprüche 1 bis 7,
**dadurch gekennzeichnet, dass** der schaftförmige Abschnitt (10) des elektrischen Bauteils (5) bezogen auf die Längsrichtung der Achse (2) schräg nach außen weist, vorzugsweise einen Winkel von wenigstens 15°, insbesondere wenigstens 25°, weitervorzugsweise wenigstens 35°, zur Längsrichtung der Achse (2) einschließt.

9. Fahrwerksbestandteil nach einem der Ansprüche 1 bis 9,
**dadurch gekenntzeichnet, dass** das Hitzeschild (9) eine in eine Nut (19) der Achse (2) eindringende Feder (18) zur Positionierung des Hitzeschilds (9) in Längsrichtung der Achse (2) aufweist.

10. Fahrwerksbestandteil nach einem der Ansprüche 1 bis 10,
**dadurch gekennzeichnet, dass** das Hitzeschild (9) im Wesentlichen aus Stahl, vorzugsweise aus Stahlguss, gebildet ist.

11. Fahrwerksbestandteil nach einem der Ansprüche 1 bis 11,
**dadurch gekennzeichnet, dass** das Hitzeschild (9) durch ein die Achse (2) wenigstens im Wesentlichen umgreifendes Band (20) an der Achse (2) gehalten ist.

12. Fahrwerksbestandteil nach einem der Ansprüche 1 bis 12,
**dadurch gekennzeichnet, dass** der schaftförmige Abschnitt (6) des elektrischen Bauteils (5) einem Indexierring (15) zugeordent ist und dass der Indexierring (15), vorzugsweise ein Lochring, im inneren Ringraum (16) der Bremsscheibe (4) angeordnet ist.

## Claims

1. Chassis component (1) for a commercial vehicle (N), in particular a trailer or semitrailer having an axis (2), a brake disc (4) and an electrical component (5) arranged near to the brake disc, whereby the electrical component (5) has a shaft-shaped section (6) and a connection section (7) for connecting an electrical cable (8) and whereby the shaft-shaped section (6) is received in a sleeve-shaped section (10) of a heat shield (9),
**characterised in that**
the heat shield (9) has a collar-shaped section (17) assigned to the connection section (7) of the electrical component (5) and **in that** the connection section (7) is spaced from the collar-shaped section (17) in the direction of the brake disc (4).

2. Chassis component according to claim 1,
**characterised in that**
the electrical component (5) is an ABS sensor.

3. Chassis component according to claim 1 or claim 2,
**characterised in that**
the connection section (7) is spaced from the collar-shaped section (17)in the direction of the brake disc (4) by means of an insulating material, preferably an air gap.

4. Chassis according to any one of claims 1 to 3,
**characterised in that**
essentially all straight lines between the connection section (7) and the brake disc (4) penetrate the collar-shaped section (17) of the heat shield (9).

5. Chassis according to any one of claims 1 to 4,
**characterised in that**
the collar-shaped section (17) of the heat shield (9) encompasses the connection section (7) at least in part, and is preferably formed such that the heat shield (9) forms a recess to receive the connection section (7) in the heat shield (9).

6. Chassis according to any one of claims 1 to 5,
**characterised in that**
the collar-shaped section (17) of the heat shield (9) has a spherical shape at least in part, preferably a shell-like shape.

7. Chassis according to any one of claims 1 to 6,
**characterised in that**
the collar-shaped section (17) of the heat shield (9) extends in an outwards direction starting from the sleeve-shaped section (10) of the heat shield (9) diagonal to the longitudinal direction of the shaft-shaped section (10) of the electrical component (5).

8. Chassis according to any one of claims 1 to 7,
**characterised in that**
the shaft-shaped section (10) of the electrical component (5) points in an outward direction relative to the longitudinal direction of the axis (2), preferably comprising an angle of at least 15°, in particular at least 25°, more preferably at least 35° relative to the longitudinal direction of the axis (2).

9. Chassis according to any one of claims 1 to 9,
**characterised in that**
the heat shield (9) has a tongue (18) which penetrates a groove (19) in the axis (2) for the positioning of the heat shield (9) in the longitudinal direction of the axis (2).

10. Chassis according to any one of claims 1 to 10,
**characterised in that**
the heat shield (9) is essentially formed from steel, preferably from cast steel.

11. Chassis according to any one of claims 1 to 11,
**characterised in that**
the heat shield (9) is kept on the axis (2) by means of a strip (20) which essentially encompasses the axis (2).

12. Chassis according to any one of claims 1 to 12,
**characterised in that**
the shaft-shaped section (6) of the electrical component (5) is assigned to an indexing ring (15) and **in that** the indexing ring (15), preferably a ring comprising holes, is arranged in the inner annular gap (16) in the brake disc (4).

## Revendications

1. Composant de train de roulage (1) d'un véhicule utilitaire (N), en particulier d'une remorque ou d'une semi-remorque, possédant un axe (2), un frein à disque (4) et un élément électrique (5) disposé à proximité du frein à disque (4), dans lequel l'élément électrique (5) présente une section en forme de tube (6) et une section de raccordement (7) servant au raccordement d'un câble électrique (8), dans lequel en outre la section en forme de tube (6) est introduite dans une section en forme de douille (10) d'un bouclier thermique (9),
**caractérisé en ce que** le bouclier thermique (9) présente une section en forme de collerette (17) disposée alentour de la section de raccordement (7) de l'élément électrique (5) et **caractérisé en ce que** la section de raccordement (7) est maintenue à distance de la section en forme de collerette (17) dans la direction du frein à disque (4).

2. Composant de train de roulage selon la revendication 1, **caractérisé en ce que** l'élément électrique (5) est le capteur d'un système anti-bloqueur de roue.

3. Composant de train de roulage selon la revendication 1 ou 2, **caractérisé en ce que** la section de raccordement (7) est maintenue à distance de la section en forme de collerette (17), dans la direction du frein à disque (4), par un matériau d'isolation thermique, de préférence par un espace constitué d'air.

4. Composant de train de roulage selon l'une quelconque des revendications 1 à 3, **caractérisé en ce que** sensiblement tous les éléments de connexion entre la section de raccordement (7) et le frein à disque (4) traversent la section en forme de collerette (17) du bouclier thermique (9).

5. Composant de train de roulage selon l'une quelconque des revendications 1 à 4, **caractérisé en ce que** la section en forme de collerette (17) du bouclier thermique (9) entoure la section de raccordement (7) sur au moins une portion de celle-ci, et de préférence, a reçu une forme telle que le bouclier thermique (9) constitue une protubérance destinée à recevoir la section de raccordement (7) dans le bouclier thermique (9).

6. Composant de train de roulage selon l'une quelconque des revendications 1 à 5, **caractérisé en ce que** la section en forme de collerette (17) du bouclier thermique (9) se présente, au moins partiellement, sous une forme sphérique, et de façon préférée, sous une forme conchylique.

7. Composant de train de roulage selon l'une quelconque des revendications 1 à 6, **caractérisé en ce que** la section en forme de collerette (17) du bouclier thermique (9) part de la section en forme de douille (10) du bouclier thermique (9) et s'étend vers l'extérieur, en biais par rapport à la direction longitudinale de la section de forme de tube (10) de l'élément électrique (5).

8. Composant de train de roulage selon l'une quelconque des revendications 1 à 7, **caractérisé en ce que** la section en forme de tube (10) de l'élément électrique (5) se développe vers l'extérieur en biais par rapport à la direction longitudinale de l'axe (2) et forme, avec la direction longitudinale de l'axe (2), un angle d'au moins 15 °, de façon préférée d'au moins 25 °, et de façon particulièrement préférée d'au moins 35 °.

9. Composant de train de roulage selon l'une quelconque des revendications 1 à 9, **caractérisé en ce que** le bouclier thermique (9) possède une languette (18) s'engageant dans une encoche (19) de l'axe (2), pour le positionnement du bouclier thermique (9) dans la direction longitudinale de l'axe (2).

10. Composant de train de roulage selon l'une quelconque des revendications 1 à 10, **caractérisé en ce que** le bouclier thermique (9) est constitué essentiellement d'acier, et de préférence, d'acier moulé.

11. Composant de train de roulage selon l'une quelconque des revendications 1 à 11, **caractérisé en ce que** le bouclier thermique (9) est maintenu sur l'axe (2) par une bande qui au moins, et pour l'essentiel, enserre l'axe (2).

12. Composant de train de roulage selon l'une quelconque des revendications 1 à 12, **caractérisé en ce que** la section en forme de tube (6) de l'élément électrique (5) est reliée à un anneau de fixation (15), et **en ce que** l'anneau de fixation (15), de préférence un collier de serrage à trous, est tourné vers l'espace intérieur annulaire (16) du frein à disque (4).
